## Europäisches Patentamt
## European Patent Office
## Office européen des brevets

(11) Veröffentlichungsnummer: **0 330 030**
**A2**

# (12) EUROPÄISCHE PATENTANMELDUNG

(21) Anmeldenummer: 89102387.1

(22) Anmeldetag: 11.02.89

(51) Int. Cl.4: **F16M 11/04**

(30) Priorität: 22.02.88 DE 3805425

(43) Veröffentlichungstag der Anmeldung:
30.08.89 Patentblatt 89/35

(84) Benannte Vertragsstaaten:
AT BE CH DE ES FR GB GR IT LI LU NL SE

(71) Anmelder: **Rittal-Werk Rudolf Loh GmbH & Co. KG**
**Auf dem Stützelberg**
**D-6348 Herborn(DE)**

(72) Erfinder: **Reuter, Wolfgang**
**Dorfstrasse 16**
**D-5909 Burbach-Würgendorf(DE)**
Erfinder: **Debus, Jürgen**
**Am Ebersbach 50**
**D-6344 Ditzhölztal 1(DE)**
Erfinder: **Lehr, Lothar**
**Dresselndorfer Strasse 16**
**D-5909 Burbach-Oberdresselndorf(DE)**

(74) Vertreter: **Vogel, Georg**
**Pat.-Ing. Georg Vogel**
**Hermann-Essig-Strasse 35**
**D-7141 Schwieberdingen(DE)**

(54) **Aufhängevorrichtung für Steuergeräte, Steuertafeln, oder dgl.**

(57) Die Erfindung betrifft eine Aufhängevorrichtung für Steuergeräte, Steuertafeln und dgl., die aus einem mit einer Wand oder einem Maschinenkörper verbindbaren Anschlußflansch oder Anschlußdrehgelenk, Tragkörperabschnitten, Winkeln, Zwischengelenken und einer mit dem Steuergerät, der Steuertafel oder dgl. verbindbaren Kupplung zusammensetzbar ist. Ein stabiler Tragkörperabschnitt mit leichtem Einbringen der Verbindungsleitungen und mit einfacher Anschlußmöglichkeit zu benachbarten Teilen der Aufhängevorrichtung wird dadurch geschaffen, daß die Tragkörperabschnitte aus einem im wesentlichen U-förmigen Grund-Profilabschnitt besteht, der mittels eines zu seinem Steg parallel verlaufenden Trennsteg in ein geschlossenes Tragteil und ein dem Steg abgekehrt offenes U-förmiges Aufnahmeteil unterteilt ist, daß sowohl an dem des Tragteils als auch an dem Aufnahmeteil längsgerichtete Verbindungsstege mit durchgehenden Schraubaufnahmen angeformt sind, daß die Seitenschenkelabschnitte des Aufnahmeteils in Verbindungsenden mit längsgerichteten, durchgehenden Hinterschnitten auslaufen und daß ein im Querschnitt U-förmiger Deckelprofilabschnitt, dessen Seitenschenkel mit längsgerichteten, durchgehenden Einhänge- oder Rastansätzen versehen sind, lösbar mit den Verbindungsenden des Aufnahmeprofils verbindbar und damit das Aufnahmeprofil verschließbar ist.

FIG.1

## Aufhängevorrichtung für Steuergeräte, Steuertafeln oder dgl.

Die Erfindung betrifft eine Aufhängevorrichtung für Steuergeräte, Steuertafeln und dgl., die aus einem mit einer Wand oder einem Maschinenkörper verbindbaren Anschlußflansch oder Anschlußdrehgelenk, Tragkörperabschnitten, Winkeln, Zwischengelenken und einer mit dem Steuergerät, der Steuertafel oder dgl. verbindbaren Kupplung zusammensetzbar ist.

Mit dem Anschlußflansch, dem Anschlußdrehgelenk, den Zwischengelenken und der Kupplung wird z.B. eine universelle Verschwenkbarkeit des am Ende der Aufhängevorrichtung angebrachten Steuergerätes erreicht. Die Tragkörperabschnitte lassen in Verbindung mit den Winkeln einen Höhen- und Seitenausgleich zwischen der Verbindungsstelle der Aufhängevorrichtung an der Wand oder dem Maschinenkörper und dem Steuergerät bzw. der Steuertafel zu.

Bekannte Aufhängevorrichtungen dieser Art verwenden als Tragkörperabschnitte aus Festigkeitsgründen Hohlprofilabschnitte. Dies hat den Nachteil, daß die elektrischen Verbindungsleitungen und andere Leitungen von der Maschine zum Steuergerät durch die Tragkörperabschnitte, sowie die Winkel und die Drehgelenke eingefädelt werden müssen. Dies ist umständlich und zeitraubend.

Es sind auch Aufhängevorrichtungen bekannt, bei denen die Tragkörperabschnitte als U-Profilabschnitte ausgebildet sind und nach dem Einbringen der Verbindungsleitungen mittels einer Abdeckung abgedeckt werden. Diese Tragkörperabschnitte erleichtern das Einbringen der Verbindungsleitungen, sie müssen aber einen verhältnismäßig großen Querschnitt aufweisen, um eine ausreichend große Belastung abfangen zu können.

Bei beiden bekannten Aufhängevorrichtungen ist zudem die Verbindung des Anschlußflansches, des Anschlußdrehgelenkes, der Zwischengelenke, der Winkel und der Kupplung an die Tragkörperabschnitte kompliziert und aufwendig.

Es ist Aufgabe der Erfindung, für eine Aufhängevorrichtung der eingangs erwähnten Art einen Tragkörperabschnitt zu schaffen, der bei leichtem Einbringen der Verbindungsleitungen eine ausgezeichnete Stabilität aufweist und in einfacher Weise mit einem Anschlußflansch, einem Anschlußgelenk, einem Zwischengelenk und einer Kupplung verbunden werden kann.

Diese Aufgabe wird nach der Erfindung dadurch gelöst, daß die Tragkörperabschnitte aus einem im wesentlichen U-förmigen Grund-Profilabschnitt besteht, der mittels eines zu seinem Steg parallel verlaufenden Trennsteg in ein geschlossenes Tragteil und ein dem Steg abgekehrt offenes U-förmiges Aufnahmeteil unterteilt ist, daß sowohl an dem des Tragteils als auch an dem Aufnahmeteil längsgerichtete Verbindungsstege mit durchgehenden Schraubaufnahmen angeformt sind, daß die Seitenschenkelabschnitte des Aufnahmeteils in Verbindungsenden mit längsgerichteten, durchgehenden Hinterschnitten auslaufen und daß ein im Querschnitt U-förmiger Deckelprofilabschnitt, dessen Seitenschenkel mit längsgerichteten, durchgehenden Einhänge- oder Rastansätzen versehen sind, lösbar mit den Verbindungsenden des Aufnahmeprofils verbindbar und damit das Aufnahmeprofil verschließbar ist. Der Tragteil des Grund-Profilabschnittes bringt die erforderliche Stabilität für den Tragkörperabschnitt, während das Aufnahmeteil bei abgenommenem Deckelprofilabschnitt leicht die Verbindungsleitungen durch einfaches Einlegen aufnehmen kann. Der Deckelprofilabschnitt ist leicht mit dem Grund-Profilabschnitt verbindbar und wieder von diesem lösbar, ohne dafür getrennte Befestigungselemente, wie Schrauben oder dgl., verwenden zu müssen.

Nach einer Ausgestaltung ist vorgesehen, daß die Verbindungsstege auf den Innenseiten der Seitenschenkelabschnitte des Tragteils und des Aufnahmeteils angeformt sind, wobei jeweils mindestens ein Paar von aufeinander ausgerichteten Verbindungsstegen im Tragteil und im Aufnahmeteil angeordnet sind. Die Verbindungsstellen zu den anschließenden Teilen, wie Anschlußflansch, Anschlußdrehgelenk, Zwischengelenk, Winkel oder Kupplung, liegen dann innerhalb der etwa rechteckförmigen Außenkontur des Tragkörperabschnittes.

Für die Ausbildung der Verbindungsstege ist vorgesehen, daß die Schraubaufnahmen in den Verbindungsstegen mittels durchgehender Schlitze geöffnet sind, wobei die Schlitzbreite so bemessen ist, daß die Schraubaufnahmen sich über mehr als $180°$, vorzugsweise etwa $270°$, ihres Umfanges erstrecken. Damit wird eine leichte Entformbarkeit bei der Herstellung des Grund-Profils erreicht und dennoch ein ausreichender Halt der Befestigungsschrauben in den Schraubaufnahmen der Verbindungsstege gewährleistet.

Nach einer bevorzugten Ausgestaltung ist vorgesehen, daß die Schraubaufnahmen der Verbindungsstege mit ihren Mittellängsachsen etwa in gleichem Abstand zu dem Steg angeordnet sind, der den Grund-Profilabschnitt in das Tragteil und das Aufnahmeteil unterteilt. Damit kann eine zum Steg des Grund-Profilabschnittes symmetrische Befestigung erreicht werden.

Ist nach einer Ausgestaltung vorgesehen, daß der Steg auf der dem Aufnahmeteil zugekehrten Seite mittig eine durchgehende T-Nut aufweist, dann können im Aufnahmeteil die Verbindungsleitungen zusätzlich festgelegt werden. In die T-Nut lassen sich Befestigungselemente an jeder beliebigen Stelle einführen und durch Verdrehen festlegen, wobei ein Teil des Befestigungselementes in den erweiterten Bereich der T-Nut eingedreht wird.

Für die Verbindung des Deckelprofilabschnittes mit dem Aufnahmeteil des Grund-Profilabschnittes ist vorgesehen, daß die Hinterschnitte auf den Außenseiten der Seitenschenkelabschnitte des Aufnahmeteils und der Einhänge-und der Rastansätze auf den Innenseiten der Seitenschenkel des Dekkelprofilabschnittes angeordnet sind. Dabei kann die Ausgestaltung so vorgenommen werden, daß die Verbindungsenden der Seitenschenkelabschnitte des Aufnahmeteils so nach innen versetzt sind, daß der mit dem Aufnahmeteil verbundene Deckelprofilabschnitt mit den Außenseiten seiner Seitenschenkel bündig mit den Außenseiten der Seitenschenkelabschnitte des Aufnahmeteils des Grund-Profilabschnittes abschließt.

Die Verbindung des Grund-Profilabschnittes eines Tragkörperabschnittes mit einem anschließenden Teil, wie Anschlußflansch, Anschlußdrehgelenk, Zwischengelenk, Winkel oder Kupplung ist einfach dadurch zu erreichen, daß der Anschlußflansch, das Anschlußdrehgelenk, der Winkel, das Zwischengelenk und die Kupplung eine Befestigungsplatte aufweisen, die auf die Verbindungsstege mit den Schraubaufnahmen ausgerichtete Schraubstutzen oder dgl. trägt und mit angeformten Wandteilen den Grund-Profilabschnitt zumindest teilweise umfangsseitig aufnimmt und führt.

Um eine Ausrichtmöglichkeit für den Tragkörperabschnitt an der Befestigungsplatte zu erhalten, sieht eine Weiterbildung vor, daß der Steg des Grund-Profilabschnittes zwischen Wandteilen und einer an der Befestigungsplatte angeformten Zentrierplatte gehalten ist, daß sich auf dem Trennsteg des Grund-Profilabschnittes eine an der Befestigungsplatte angeformte Stellplatte mit Spiel abstützt, daß in der Stellplatte eine Gewindebohrung angebracht ist, in der eine sich auf dem Trennsteg abstützende Stellschraube eingeschraubt ist und daß die Befestigungsfläche der Befestigungsplatte leicht geneigt ist.

Eine andere Ausrichtmöglichkeit ist dadurch geschaffen, daß in der Befestigungsplatte eine Gewindebohrung für eine Stellschraube eingebracht ist, die sich an der Stirnseite des Trennsteges des Grund-Profilabschnittes des Tragkörperabschnittes abstützt.

Die Erfindung wird anhand eines in den Zeichnungen dargestellten Ausführungsbeispiels näher erläutert. Es zeigt:

Fig. 1 eine komplette Aufhängevorrichtung in perspektivischer Ansicht,

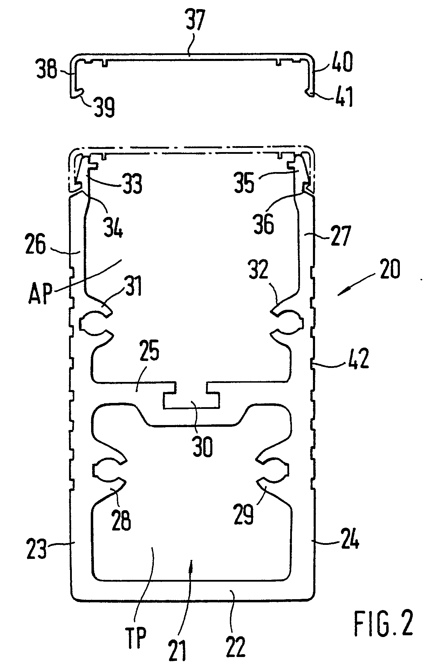

Fig. 2 den Tragkörperabschnitt im Querschnitt,

Fig. 3 in Explosionsdarstellung die Verbindung zwischen dem Grund-Profilabschnitt eines Tragkörperabschnittes mit der Befestigungsplatte eines Anschlußflansches, eines Anschlußdrehgelenkes, eines Zwischengelenkes, eines Winkels oder einer Kupplung,

Fig. 4 schematisch die Ausrichtung des Grund-Profilabschnittes an der Befestigungsplatte und

Fig. 5 den an der Befestigungsplatte angebrachten Tragkörperabschnitt.

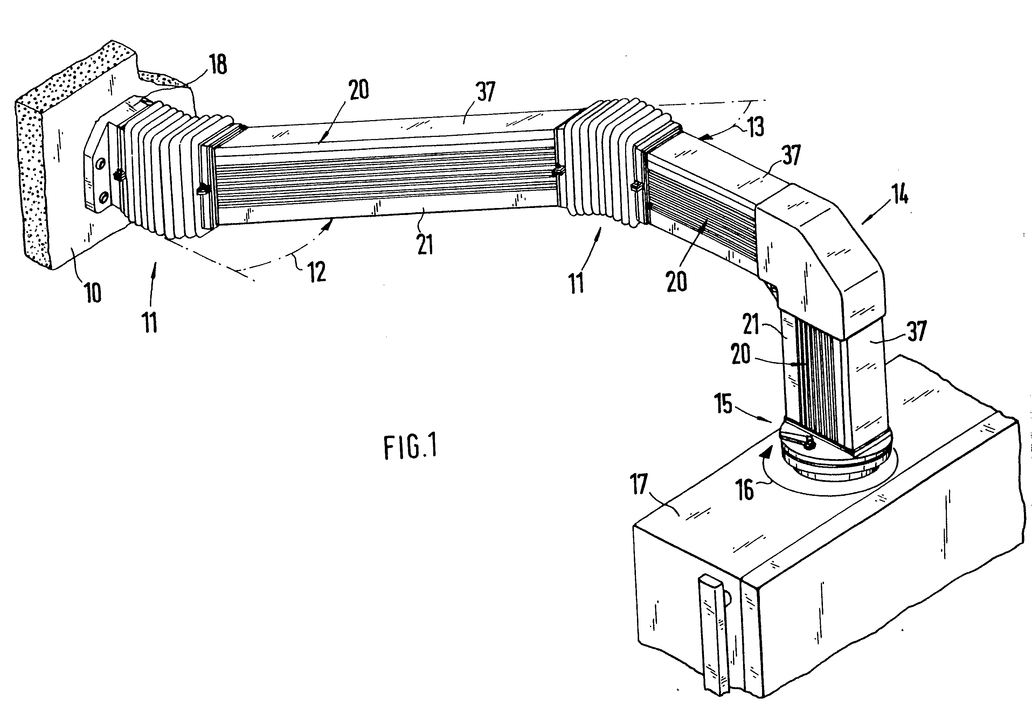

Mit 10 ist in Fig. 1 eine Wand oder ein Maschinenkörper angegeben, an der bzw. dem die als Tragarm ausgebildete Aufhängevorrichtung angebracht ist. Der Anschlußflansch 18 ist mit dem Teil 10 verbunden. Daran schließt sich ein Zwischengelenk 11 an, das mittels eines Faltenbalges abgedeckt ist. Der Anschlußflansch 18 und das Zwischengelenk 11 können auch als ein Anschlußdrehgelenk ausgebildet sein und eine Einheit darstellen. Daran schließt sich der erste horizontal ausgerichtete Tragkörperabschnitt 20 an, der aus einem Grund-Profilabschnitt 21 und einem Deckelprofilabschnitt 37 besteht. Der Tragkörperabschnitt 20 ist an dem Anschlußdrehgelenk verschwenkbar, wie der Schwenkwinkel 12 andeutet. An den Tragkörperabschnitt 20 schließt sich über das mittels Faltenbalg abgedeckte Zwischengelenk 11 ein weiterer horizontaler Tragkörperabschnitt 20 an, der schließlich über den Winkel 14 mit dem vertikalen Tragkörperabschnitt 20 verbunden ist. Der Schwenkwinkel 13 deutet an, daß die beiden horizontalen Tragkörperabschnitte 20 gegeneinander verschwenkbar sind. Das untere Ende des vertikalen Tragkörperabschnittes 20 ist mit der Kupplung 15 verbunden, die das Steuergerät 17 trägt. Über die Kupplung 15 ist das Steuergerät 17 an dem vertikalen Tragkörperabschnitt 20 verdrehbar, wie der Schwenkkreis 16 zeigt. Die Aufhängevorrichtung nach Fig. 1 stellt nur ein Ausführungsbeispiel dar. Die Tragkörperabschnitte 20 haben unterschiedliche Länge. Die einzelnen Teile können auch in anderer Reihenfolge zu einer anderen Aufhängevorrichtung zusammengebaut sein.

Um die Tragkörperabschnitte 20 in verschiedenen Längen bereitstellen zu können, wird der Grund-Profilabschnitt 21 von einem entsprechenden Profilstrang in der erforderlichen Länge abgelängt. Der Grund-Profilabschnitt 21 ist im wesentlichen U-förmig, wobei sich an den Steg 22 die Seitenschenkelabschnitte 23 und 26 bzw. 24 und 27 anschließen. Der Trennsteg 25, der parallel zum Steg 22 verläuft, unterteilt den Grund-Profilabschnitt 21 in das Tragteil TP und das Aufnahmeteil AP. Das Tragteil TP ist ein geschlossenes Hohlprofil aus dem Steg 22, den Seitenschenkelabschnitten 23 und 24 sowie dem Trennsteg 25. Das Aufnahmeteil AP wird durch den Trennsteg 25 und die Seitenschenkelabschnitte 26 und 27 gebildet. Es ist auf der dem Steg 22 abgekehrten Seite des Grund-Profilabschnittes 21 offen und dient als Aufnahme für die Verbindungsleitungen. Das Tragteil TP verleiht dem Grund-Profilabschnitt 21 eine ausgezeichnete Stabilität und das offene Aufnahmeteil AP erleichtert das Einbringen der Verbindungsleitungen. Die Seitenschenkelabschnitte 26 und 27 laufen in die Verbindungsenden 33 und 35 aus, die mit Hinterschnitten 34 und 36 versehen sind. Das Aufnahmeteil AP wird mittels des U-förmigen Deckelprofilabschnittes 37 verschlossen, dessen Seitenschenkel 38 und 40 mit einem Einhängeansatz 39 bzw. einem Rastansatz 41 versehen sind. Ist der Einhängeansatz 39 des Seitenschenkels 38 in den Hinterschnitt 34 des Verbindungsendes 33 des Seitenschenkelabschnittes 26 eingehängt, dann wird beim Aufrasten des Deckelprofilabschnittes 37 der Rastansatz 41 des Seitenschenkels 40 in den Hinterschnitt 36 im Verbindungsende 35 des Seitenschenkelabschnittes 27 einrasten. Der Deckelprofilabschnitt 37 kann aber durch Aufheben dieser Rastverbindung leicht wieder von dem Aufnahmeteil AP des Grund-Profilabschnittes 21 gelöst werden.

Die Verbindungsenden 33 und 35 sind gegenüber den Seitenschenkelabschnitten 26 und 27 so weit nach innen versetzt, daß der Deckelprofilabschnitt 37 mit den Außenseiten seiner Seitenschenkel 38 und 40 bündig mit den Außenseiten der Seitenschenkelabschnitte 26 und 27 abschließt. Die Hinterschnitte 34 und 36 sind längsgerichtet und durchgehend. Der gleich lange Deckelprofilabschnitt 37 hat ebenfalls einen längsgerichteten und durchgehenden Einhängeansatz 39 bzw. Rastansatz 41.

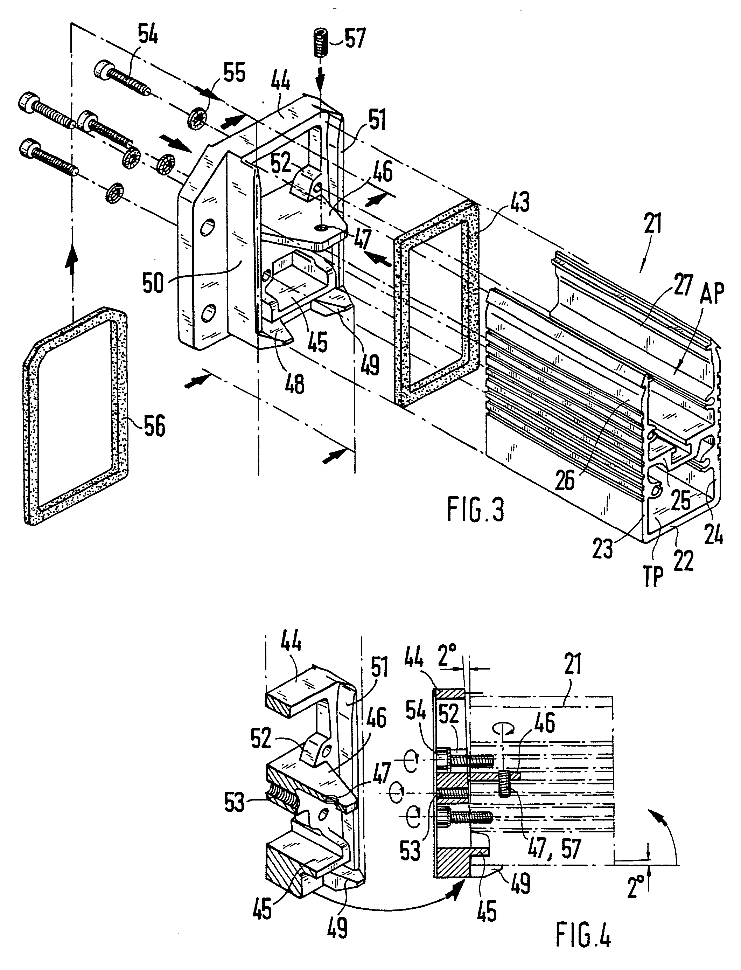

Auf den Innenseiten der Seitenschenkelabschnitte 23, 24, 26 und 27 sind längsgerichtete, durchgehende Verbindungsstege 28, 29, 31 und 32 mit Schraubaufnahmen angeformt. Die Schraubaufnahmen sind mittels durchgehender Schlitze geöffnet, so daß sie leicht entformt werden können. Die Breite der Schlitze ist so, daß sich die Schraubaufnahme über mehr als 180° ihres Umfanges, vorzugsweise über etwa 270°, erstreckt. Die Schlitze erleichtern das Herstellen des Grund-Profilabschnittes 21 im Strangpreßverfahren. Die Paare der Verbindungsstege 28 und 29 bzw. 31 und 32 im Tragteil TP bzw. Aufnahmeteil AP sind aufeinander ausgerichtet und die Mittellängsachsen der Schraubaufnahmen haben etwa gleichen Abstand zum Trennsteg 25. Mit Hilfe der Schraubaufnahmen läßt sich in einfacher Weise an die Stirnseiten des Grund-Profilabschnittes 21 eine Befestigungsplatte 44 anschrauben, wie sie in den Fig. 3 und 4 gezeigt ist. Diese Befestigungsplatte 44 kann die Anschlußplatte selbst sein oder nur Teil des Anschlußdrehgelenkes, des Zwischengelenkes, des Winkels oder der Kupplung.

Die Befestigungsplatte 44 gibt mit den abstehenden Wandteilen 48, 49, 50 und 51 eine Führung und eine umfangsseitige Aufnahme für den Grund-Profilabschnitt 21. Die Schraubstutzen 52 sind auf die Schraubaufnahmen der Verbindungsstege 28, 29, 31 und 32 ausgerichtet, so daß die Befestigungsplatte 44 mit den Befestigungsschrauben 54 unter Zwischenlage der Scheiben 55 mit der Stirnseite des Grund-Profilabschnittes 21 verschraubt werden kann. Die Zentrierplatte 45, die an der Befestigungsplatte 44 angeformt ist, nimmt mit den Wandteilen 48 und 49 den Steg 22 eindeutig geführt auf, so daß die Zuordnung zwischen der Befestigungsplatte 44 und der Stirnseite des Grund-Profilabschnittes 21 gegeben ist. Die an der Befestigungsplatte 44 angeformte Stellplatte 46 legt sich mit Spiel über den Trennsteg 25. In die Gewindebohrung 47 der Stellplatte 46 wird die Stellschraube 57 eingeschraubt, die sich an dem Trennsteg 25 abstützt. Ist die Befestigungsfläche der Befestigungsplatte 44 leicht geneigt, z.B. 2°, dann kann mit der Stellschraube 57 der Grund-Profilabschnitt 21 an der Befestigungsplatte 44 ausgerichtet werden, um eine eindeutige Horizontal- bzw. Vertikalstellung des Grund-Profilabschnittes 21 und damit des Tragkörperabschnittes 20 auch bei Belastung einstellen zu können.

Der Ausgleich kann aber auch mittels einer Stellschraube vorgenommen werden, die in die Gewindebohrung 53 der Befestigungsplatte 44 eingeschraubt wird und sich an der Stirnseite des Trennsteges 25 des Grund-Profilabschnittes 21 abstützt. Das Dichtungselement 43 kann dabei zwischen die Befestigungsplatte 44 und den Grund-Profilabschnitt 21 eingebracht werden, während das Dichtungselement 56 die Befestigungsplatte 44 zum anschließenden Teil, z.B. einer Wand oder einem Maschinenkörper, hin abdichtet.

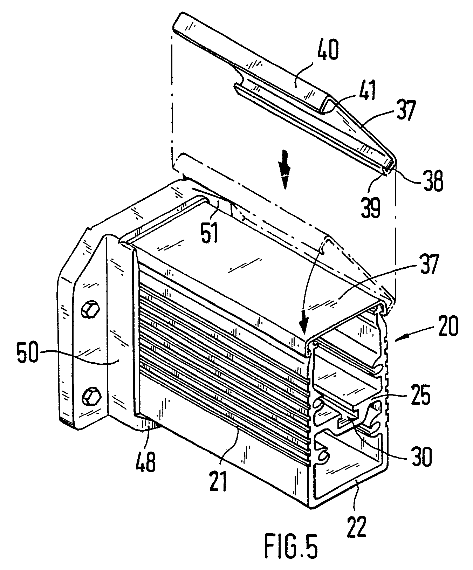

In Fig. 5 ist die Stellung gezeigt, wenn der Tragkörperabschnitt 20, der aus dem Grund-Profilabschnitt 21 und dem Deckelprofilabschnitt 37 besteht, mit der Befestigungsplatte 44 verbunden ist. Es ist deutlich zu sehen, daß die Wandteile 48, 50 und 51, eine Aufnahme und Führung für den zusammengesetzten Tragkörperabschnitt 20 bilden.

Die durchgehende T-Nut 30 im Trennsteg 25 ermöglicht an jeder beliebigen Stelle in Längsrichtung des Aufnahmeteils eine zusätzliche Befestigung der Verbindungsleitungen. Das Befestigungselement ist dabei so gestaltet, daß es in einer bestimmten Stellung in die T-Nut 30 eingeführt und durch Verdrehen in dieser festgelegt werden kann.

## Ansprüche

1. Aufhängevorrichtung für Steuergeräte, Steuertafeln und dgl., die aus einem mit einer Wand oder einem Maschinenkörper verbindbaren Anschlußflansch oder Anschlußdrehgelenk, Tragkörperabschnitten, Winkeln, Zwischengelenken und einer mit dem Steuergerät, der Steuertafel oder dgl. verbindbaren Kupplung zusammensetzbar ist,
dadurch gekennzeichnet,
daß die Tragkörperabschnitte (20) aus einem im wesentlichen U-förmigen Grund-Profilabschnitt (21) besteht, der mittels eines zu seinem Steg (22) parallel verlaufenden Trennsteg (25) in ein geschlossenes Tragteil (TP) und ein dem Steg (22) abgekehrt offenes U-förmiges Aufnahmeteil (AP) unterteilt ist,
daß sowohl an dem des Tragteils (TP) als auch an dem Aufnahmeteil (AP) längsgerichtete Verbindungsstege (28,29, 31,32) mit durchgehenden Schraubaufnahmen angeformt sind,
daß die Seitenschenkelabschnitte (26,27) des Aufnahmeteils (AP) in Verbindungsenden (33,35) mit längsgerichteten, durchgehenden Hinterschnitten (34,36) auslaufen und
daß ein im Querschnitt U-förmiger Deckelprofilabschnitt (37), dessen Seitenschenkel (38,40) mit längsgerichteten, durchgehenden Einhänge- oder Rastansätzen (39,41) versehen sind, lösbar mit den Verbindungsenden (33,35) des Aufnahmeprofils (AP) verbindbar und damit das Aufnahmeprofil (AP) verschließbar ist.

2. Aufhängevorrichtung nach Anspruch 1,
dadurch gekennzeichnet,
daß die Verbindungsstege (28,29, 31,32) auf den Innenseiten der Seitenschenkelabschnitte (23,24, 26,27) des Tragteils (TP) und des Aufnahmeteils (AP) angeformt sind, wobei jeweils mindestens ein Paar von aufeinander ausgerichteten Verbindungsstegen (28,29 bzw. 31,32) im Tragteil (TP) und im Aufnahmeteil (AP) angeordnet sind.

3. Aufhängevorrichtung nach Anspruch 1 oder 2,
dadurch gekennzeichnet,
daß die Schraubaufnahmen in den Verbindungsstegen (28,29, 31,32) mittels durchgehender Schlitze geöffnet sind, wobei die Schlitzbreite so bemessen ist, daß die Schraubaufnahmen sich über mehr als 180°, vorzugsweise etwa 270°, ihres Umfanges erstrecken.

4. Aufhängevorrichtung nach einem der Ansprüche 1 bis 3,
dadurch gekennzeichnet,
daß die Schraubaufnahmen der Verbindungsstege, (28,29, 31,32) mit ihren Mittellängsachsen etwa in gleichem Abstand zu dem Steg (25) angeordnet sind, der den Grund-Profilabschnitt (21) in das Tragteil (TP) und das Aufnahmeteil (AP) unterteilt.

5. Aufhängevorrichtung nach einem der Ansprüche 1 bis 4,
dadurch gekennzeichnet,
daß der Steg (25) auf der dem Aufnahmeteil (AP) zugekehrten Seite mittig eine durchgehende T-Nut (30) aufweist.

6. Aufhängevorrichtung nach einem der Ansprüche 1 bis 5,
dadurch gekennzeichnet,
daß die Hinterschnitte (34,36) auf den Außenseiten der Seitenschenkelabschnitte (26,27) des Aufnahmeteils (AP) und der Einhänge- und der Rastansätze (39,41) auf den Innenseiten der Seitenschenkel (38,40) des Deckelprofilabschnittes (37) angeordnet sind.

7. Aufhängevorrichtung nach einem der Ansprüche 1 bis 6,
dadurch gekennzeichnet,
daß die Verbindungsenden (33,35) der Seitenschenkelabschnitte (26,27) des Aufnahmeteils (AP) so nach innen versetzt sind, daß der mit dem Aufnahmeteil (AP) verbundene Deckelprofilabschnitt (37) mit den Außenseiten seiner Seitenschenkel (38,40) bündig mit den Außenseiten der Seitenschenkelabschnitte (26,27) des Aufnahmeteils (AP) des Grund-Profilabschnittes (21) abschließt.

8. Aufhängevorrichtung nach einem der Ansprüche 1 bis 7,
dadurch gekennzeichnet,
daß die Außenseiten der Seitenschenkelabschnitte (23,24, 26,27) von Tragteil (TP) und Aufnahmeteil (AP) des Grund-Profilabschnittes (21) mit längsgerichteten, vorzugsweise in gleichmäßigem Abstand zueinander angeordneten Nuten (42) versehen sind.

9. Aufhängevorrichtung nach einem der Ansprüche 1 bis 8,
dadurch gekennzeichnet,
daß der Anschlußflansch, das Anschlußdrehgelenk, der Winkel, das Zwischengelenk und die Kupplung eine Befestigungsplatte (44) aufweisen, die auf die Verbindungsstege (28,29, 31,32) mit den Schraubaufnahmen ausgerichtete Schraubstutzen (52) oder dgl. trägt und mit angeformten Wandteilen (48,49, 50,51) den Grund-Profilabschnitt (21) zumindest teilweise umfangsseitig aufnimmt und führt.

10. Aufhängevorrichtung nach Anspruch 9,
dadurch gekennzeichnet,
daß der Steg (22) des Grund-Profilabschnittes (21) zwischen Wandteilen (48,49) und einer an der Befestigungsplatte (44) angeformten Zentrierplatte (45) gehalten ist,
daß sich auf dem Trennsteg (25) des Grund-Profilabschnittes (21) eine an der Befestigungsplatte (44) angeformte Stellplatte (46) mit Spiel abstützt,
daß in der Stellplatte (46) eine Gewindebohrung (47) eingebracht ist, in der eine sich auf dem Trennsteg (25) abstützende Stellschraube (57) eingeschraubt ist, und

daß die Befestigungsfläche der Befestigungsplatte (44) leicht (z.B. 2°) geneigt ist.

11. Aufhängevorrichtung nach Anspruch 9 oder 10,

dadurch gekennzeichnet,

daß in der Befestigungsplatte (44) eine Gewindebohrung (53) für eine Stellschraube eingebracht ist, die sich an der Stirnseite des Trennsteges (25) des Grund-Profilabschnittes (21) des Tragkörperabschnittes (20) abstützt.

FIG.1

EP 0 330 030 A2

FIG.2

FIG.3

FIG.4

FIG.5